# EUROPEAN PATENT SPECIFICATION

(11) **EP 0 628 527 B1**
(45) Date of publication and mention of the grant of the patent: **11.04.2001**
(21) Application number: 93304392.9
(22) Date of filing: 07.06.1993
(51) Int. Cl.: C05G 3/00, C05C 9/00

(54) **Timed release of water-soluble plant nutrients**
Langzeitabgabe von wasserlöslichen Pflanzennährstoffen
Libération prolongée des substances solubles dans l'eau nutritives pour végétaux

(43) Date of publication of application: 14.12.1994
(73) Proprietor: OMS Investments, Inc., Wilmington, DE 19899-8985 (US)
(72) Inventor: Luthra, Narender Pal, Columbia, Maryland 21044 (US); Bull, Darwin Scott, Baltimore, Maryland 21207 (US); Hargrove, Garrard Lee, Vacaville, California 95688 (US)
(74) Representative: Bentham, Stephen

(56) References cited:
- EP-A- 0 305 918
- WO-A-92/15538
- US-A- 3 223 518
- CHEMICAL ABSTRACTS, vol. 116, no. 12, 30 March 1992, Columbus, Ohio, US; abstract no. 127704b, SHINOHARA, TSUNEHISA 'Sustained-release granular fertilisers' page 777 ; & JP-A-03 275 583 (...)

## Description

This invention relates generally to products capable of releasing water soluble agents at different rates over time. Specifically, the products are fertilizers which can be packed with a seed or seedling, and release nutrients in a fashion consistent with the growing plant's needs. If necessary, the products can be made to remain dormant for a predetermined period of time before nutrient release begins.

In one embodiment, the pattern of nutrient release is such that release may be substantially delayed for a predetermined period of time followed by a period of relatively high release.

In another embodiment, a period of relatively high initial release is followed by a period of relatively low, constant release. In yet another embodiment, a period of high initial release is followed by a period of very low release and then a second period of relatively high release. Since both the relative amount and timing of nutrient release can be predetermined, it is possible to fertilize plants once per year or two without fear of damaging the plants or harming the environment.

True control over the rate of nutrient release by fertilizers has long been known to be a desirable but elusive goal. A plant's need for nutrients changes from season to season, and species to species. As a result farmers, foresters and gardeners have generally relied on the use of repeated, timed doses of fertilizers in an effort to obtain optimal plant growth. A fertilizer product tailored to a plant's specific needs over relatively long period of time, would eliminate the need for one or more doses.

Such products would be of great value to nurserymen and foresters, the first because current methods of fertilizing are labor intensive, and the latter because such products could greatly increase the rate of seedling survival.

The invention generally relates to products capable of releasing of water soluble agents such as those exhibiting delayed, controlled release and those having a relatively high initial release followed by a relatively low, constant release. A "delayed, controlled release" is defined as a release for which onset is substantially delayed for a predetermined period of time. Upon onset of release, the agent is released at a controlled rate.

This invention is particularly related to the timed release of agents suitable for cultivating horticultural growth, e.g. fertilizer products. By the term "horticultural", it is meant to include not only the science of growing fruits, vegetables, flowers or ornamental plants, but also to include, but not necessarily to limit to, silviculture, i.e. a branch of forestry dealing with the development and care of forests, and the science of cultivating grasses such as home lawns.

Controlled release products have become an important tool in many fields. It is well known that controlling the rate of release of an active agent from its carrier product maximizes the agent's effect on its target and minimizes potentially harmful side effects. In other words, if it is known that the target not only requires the agent's presence at the time the product is applied, but that the agent will also be required over a specific period of time after the initial application, the product can be modified so that agent is released over the period of time mandated. Products employing controlled release have been used in many fields including, but not necessarily limited to, agriculture, health care, personal care and hygiene, and pharmaceuticals.

In the agricultural field, controlled release products are used to deliver fertilizer, herbicidal and pesticidal agents to crops to maximize the agent's effect over the crop's growing season. See U. S. Patents 3,223,518 issued to Hansen December 14, 1965; 4,019,890 issued to Fujita et al. April 26, 1977; 4,015,970 issued to Hennart April 5, 1977; and 4,851,027 issued to Murayama et al. July 25, 1989. Controlled release products are also described in WO92/15538 and EP-A-0 305 918. For instance, it is well known that crops in the early stages of development are harmed by heavy doses of fertilizer. In the past, a program comprising several light applications over the growing season had been recommended to solve that problem. However, such programs can be difficult to follow because of the increased labor costs and the incidental crop damage caused by equipment moving through the field during applications which occurred late in the program. Furthermore, when water soluble fertilizers are applied to open fields, some of the fertilizer is washed into the local drainage system by rainwater runoff. This portion of the fertilizer is ineffective for its intended use and can significantly pollute nearby waterways and reservoirs.

As a result, controlled release products which delivered fertilizer at rates which attempt to approximate a program of several light applications have been developed. To a large extent, these products are made by coating fertilizer granules or prills with various materials to reduce the rate of release of the fertilizing agent.

For instance, U. S. Patent 3,223,518 issued to Hansen December 14, 1965 discloses coatings of polymer resins exemplified by linseed oil- or soybean oil-based resins, e.g. linseed oil-based copolymers with dicyclopentadiene. The release rates of the coated products described in the '518 patent depend on various factors, some of which include the number of coatings applied to the product, or the coating's thicknesses, and the type of polymer used in the coating. The controlled release rates obtained from those coated products range from 55% of the fertilizer being released in 24 hours down to about 0.05% in 120 hours. As the graphs which appear in the '518 patent illustrate, the release rates for these coated products can be varied and can be described as a continuous release which begins upon application of the fertilizer product. In other words, the onset of release occurs almost immediately upon application of the fertilizer product and typically within a week of being applied. A fertilizer product exemplifying this type of controlled release is available as Osmocote® fertilizer from Grace-Sierra Horticultural Products Co.

Another type of coated fertilizer product employs additives to effect controlled release. U. S. Patents 4,019,890 and 4,369,055 issued to Fujita April 26, 1977 and January 18, 1983 respectively, describe polyolefin resin coatings that contain hydrophilic powder additives and surfactants which, due to their water-compatibility, create pores within the resin coatings upon contact with soil moisture. However, due to the water-insolubility of the coating resin, e.g. thermoplastics such as polyethylene, polypropylene and copolymers thereof, the coating is not detrimentally affected by the soil moisture, so the coating will not disintegrate, and remains intact. The pores in the coating allow for a low, substantially constant release rate, and similar to the release exhibited by the coated products described in the '518 patent, and the onset of this release occurs upon application of the product. Commercially available fertilizers which employ the additive approach include NUTRICOTE® fertilizers from Chisso-Asahi Fertilizer Co., Ltd.

United States Patent No. 5,089,041 issued to Thompson et al. February 18, 1992, discloses yet another type of coated fertilizer product which includes a waterborne, polyvinylidene chloride-based latex coating on a water-soluble core. The rate of release is slow and relatively constant, and onset of release begins almost immediately.

Other methods of controlling release employ microcapsules of active ingredients which are soluble in organic solvents. U. S. Patent 4,670,250, issued to Baker June 2, 1987 discloses microcapsules that are prepared from thermoplastic polymers such as polysulfones, polycarbonates and poly(styreneacrylonitrile) polymers. Again, the active ingredient is delivered at a slow and relatively constant rate.

As illustrated above controlled release products have been developed in several technical fields, especially fertilizers. As also illustrated, the degree of control of release of the fertilizers has mainly been limited to reducing the release rate of active agents, thereby preventing large amounts of fertilizer from being released too early. Such low rates however are also usually continuous for the fertilizer's period of usefulness. In instances where it would be advantageous to increase the rate of fertilizer release after that initial period of slow release, such slower release products do not maximize delivery of fertilizer. In those instances it would be preferable to have a product for which the onset of agent release is delayed for the period of time necessary, but for which at a later, predetermined time substantial release began. Also, a long-term product should be able to provide a period of nearly complete cessation of release during the dormant periods of deep winter and summer.

The present invention seeks to provide a product having a higher degree of control of the rate of release of active agents. The present invention provides a delayed, controlled release product comprising:
(a) a core comprising a water soluble active ingredient;
(b) a first coating layer on the surface of the core (a), wherein said layer has the ability to release the active ingredient at a controlled rate; and
(c) a second coating layer encapsulating (a) and (b) having a low water vapour transmission rate;
whereby said second coating layer (c) causes substantial release of the active ingredient to be delayed for at least four weeks from initial exposure of the product to moisture and, once substantial release is initiated, the rate of release corresponds essentially to that controlled by the first coating layer (b) alone.

The invention further provides a controlled release product comprising an active ingredient and a carrier, wherein the active ingredient is releasable to the environment during at least three periods of release, which product comprises a delayed release product as hereinbefore defined.

The invention yet further provides a product suitable for delayed, controlled release of a water soluble active ingredient wherein the product comprises
(a) a core comprising at least one water soluble active ingredient;
(b) a first coating layer which is intermediate to (a) and layer (c), wherein said layer has the ability to release active ingredient at a controlled rate; and
(c) a second coating layer which encapsulates (a) and (b) wherein said layer (c) has a water vapour transmission rate of 2.5g/m²/day or less.

Preferably release of the water soluble active ingredient is delayed at least four weeks.

The invention yet further provides a method of delaying the controlled release of a water soluble active ingredient wherein the method comprises employing a product comprising
(a) a core comprising at least one water soluble active ingredient;
(b) a first coating layer which is intermediate to (a) and layer (c), wherein said layer has the ability to release the active ingredient at a controlled rate; and
(c) a second coating layer which encapsulates (a) and (b), wherein said layer (c) has a water vapor transmission rate of 2.5g/m²/day or less.

The product of the invention may have a variable rate of release over time which may be tailored to the seasonal variations in a plant's nutritional requirements.

The invention further seeks to provide a fertilizer product which need be applied only once per predetermined term, such as a growing season (nine months to one year) or multiple years.

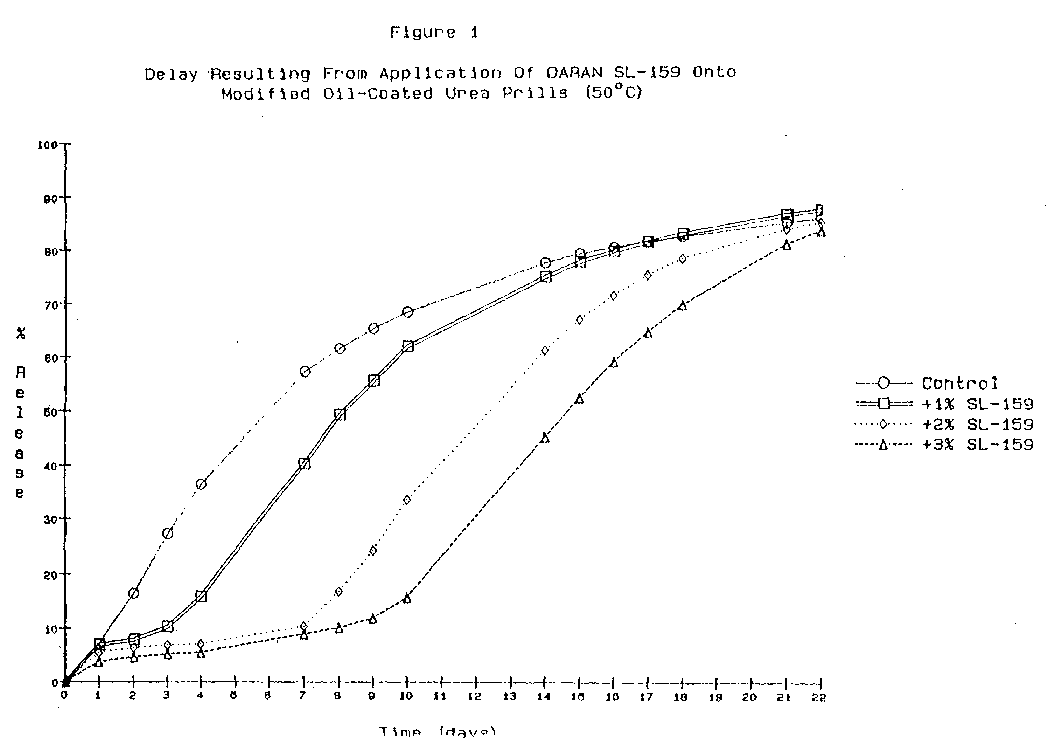

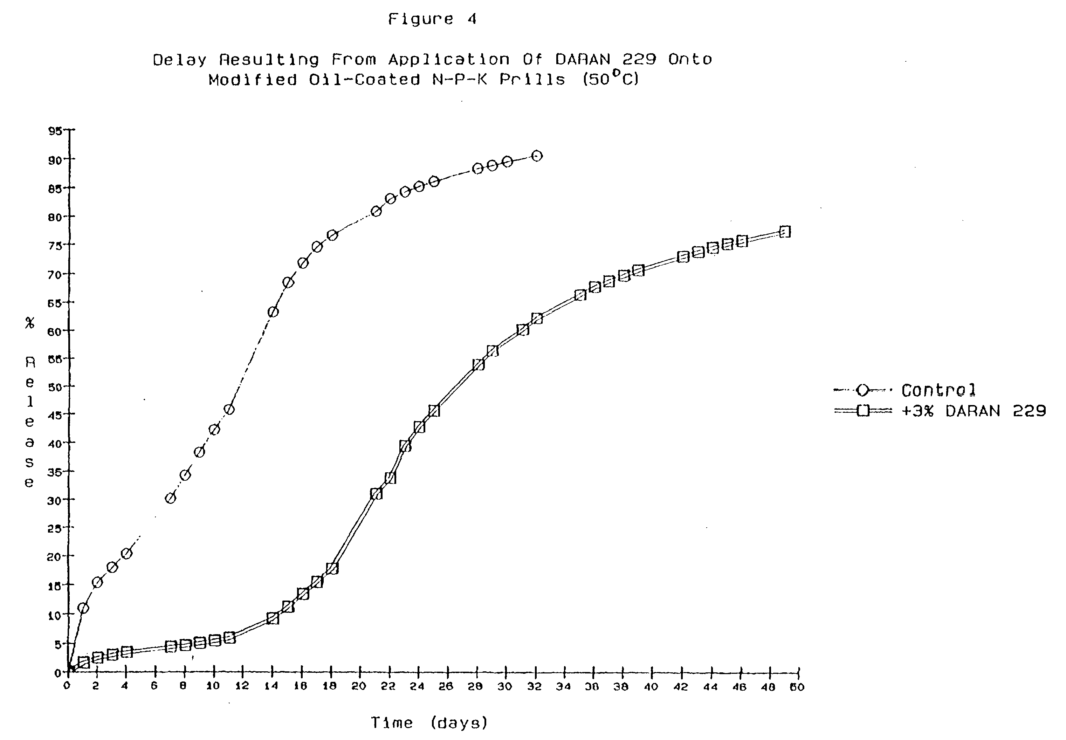

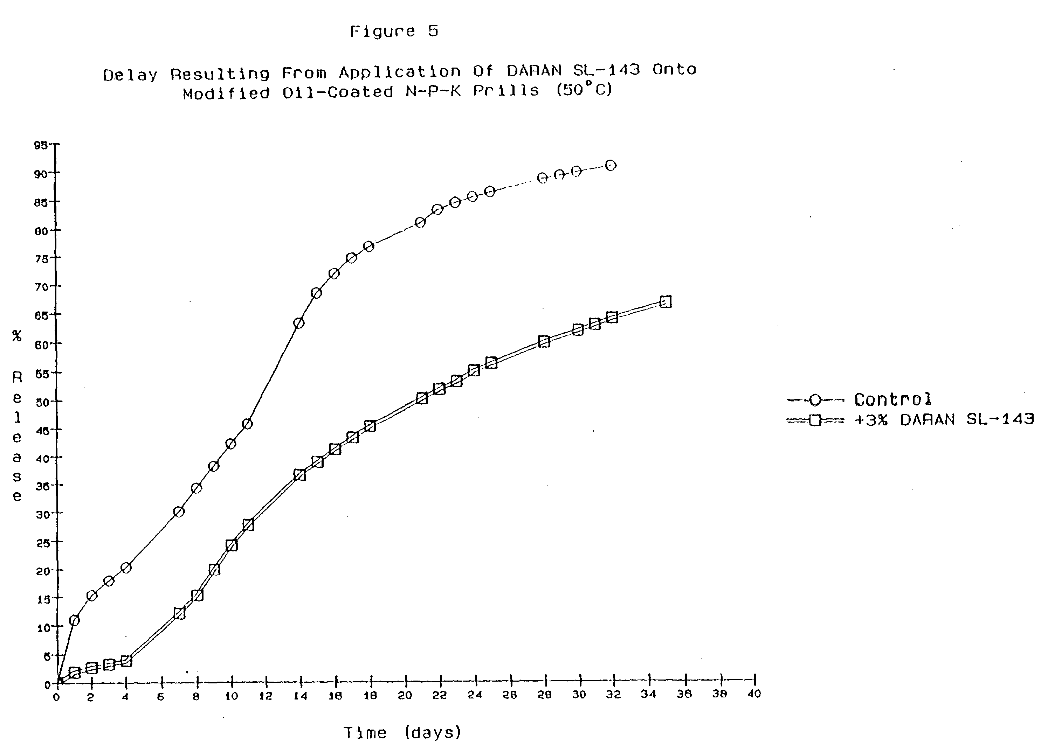

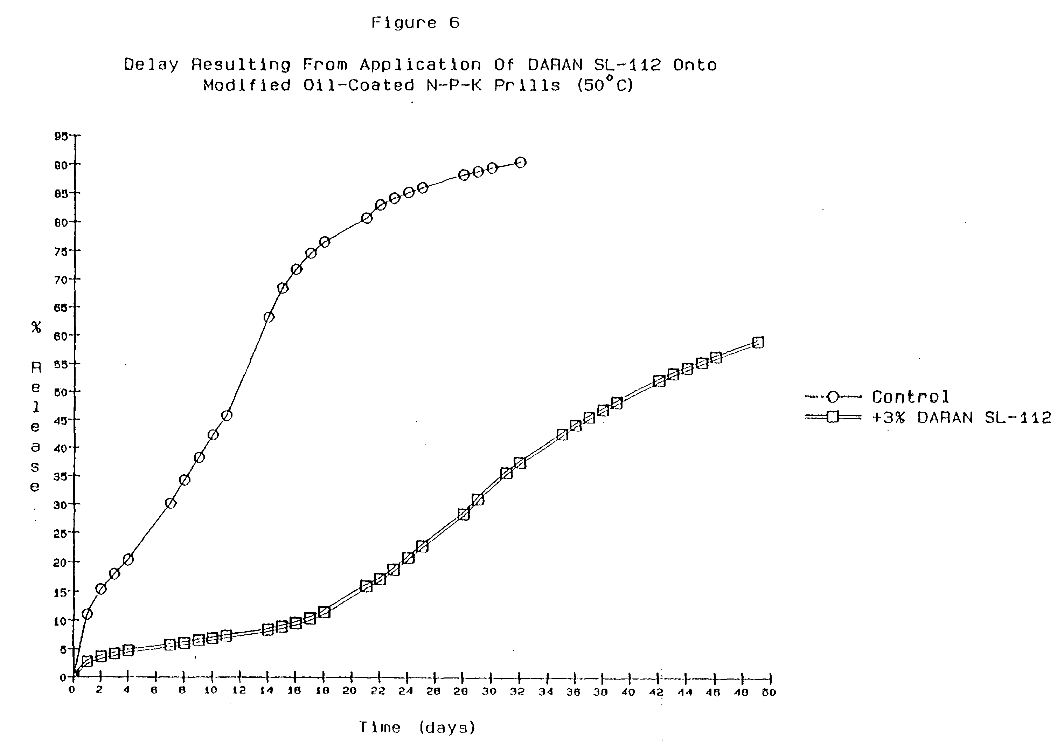

Figures 1-13 illustrate release profiles for controlled release fertilizers prepared according to Examples 1 to 10.

As mentioned above, this invention relates generally to the controlled release of water soluble active ingredient (i.e. agents). While the invention is illustrated and described below with reference to an embodiment which employs water soluble fertilizers, the invention can be used for products containing other water soluble agents. Such agents include those that are biologically or horticulturally active agents such as, but not necessarily limited to, pheromones, biofouling inhibitors, insecticides, herbicides and pharmaceuticals. Other agents include pigments, deodorants, fragrances and flavors, corrosion or scale inhibitors, catalysts, chemical additives, etc.

As with many controlled release products the product of this invention comprises a core of water soluble agent. Such cores are obtained in granule or prill form and will likely possess crevices and other surface disfigurations. For this invention, the water soluble agent should have a water solubility equal to or greater than about 1 gram per liter.

When the invention is used for fertilizers, the core will comprise minerals or organic materials which are in a form directly or indirectly assimilable by crops or vegetation. For instance, suitable fertilizer materials contain carbon, nitrogen, oxygen, phosphorus, sulfur, potassium, calcium, magnesium, manganese, zinc, copper, boron, chlorine and other trace elements. See The Yearbook of Agriculture, U.S.D.A. 1957, p. 81. Urea is frequently used. Also available are prefabricated water soluble or soil activated compounds of nitrogen, phosphorus and potassium prepared as granular heterogenous aggregates of various crystalline form which are usually acidic in nature and which have porous, rough and glassy surfaces of irregular configuration are especially preferred. The particular granular aggregates with which this invention is concerned also include such single component fertilizer and explosive ingredients classified as high analysis fertilizers. Such materials contain nitrogen, potassium, and phosphorus-based compounds. Exemplary compounds have well-known designations of 8-24-12, 8-8-6, 5-20-20, 12-12-12, 14-16-0, 4-8-6, 3-9-6, 39-0-0, 9-39-0, in terms of N, P₂O₅ and K₂O. These materials may also contain supplementary additives such as trace elements, iron salts, insecticides, herbicides, fungicides, growth inhibitors, etc. For instance, one or more suitable herbicides include derivatives of phenoxyacetic acid, phenoxypropionic acid, phenoxybutyric acid, 4-amino-3,5,6-trichloro-picolinic acid, phenoxyethyl sulphuric acid, halogenated benzoic acid, halogenated acetic acid, halogenated propionic acid, phenylurea, or bipyridylium, and certain mineral salts of sodium chlorate, sodium or potassium 2,4-dichlorophenoxyacetate, sodium or potassium 4-chloro-2-methylphenoxyacetate, sodium or potassium 2,4,5-trichlorophenoxyacetate, sodium or potassium 2-(4-chloro-2-methylphenoxy)-propionate, sodium or potassium 2-(2,4-dichlorophenoxy)-propionate, sodium or potassium 4-(2,4-dichlorophenoxy)-butyrate, sodium or potassium 4-(4-chloro-2-methylphenoxy)-butyrate, sodium or potassium 4-(2,4,5-trichlorophenoxy)-butyrate, sodium or potassium 4-amino-3,5,6-trichloropicolinate, sodium 2-(2,4-dichlorophenoxy)-ethysulfate, 2,3,6-trichlorobenzoic acid, 3,6-dichloro-2-methoxybenzoic acid, sodium chloracetate, trichloracetic acid, sodium 2,2-dichloropropionate, sodium 2,2,3-trichloropropionate, N,N-dimethyl-N'-phenyl urea and its trichloracetic salt, the trichloracetate of N,N-dimethyl-N'-(4-chlorophenyl)urea, copper sulphate, iron sulphate, 1,1'-dimethyl-4,4'-bipyridylium dichloride, 1,1'-bis(3,5-dimethyl-4-morpholinyl)-carbonylmethyl-4,4'-bipyridylium dichloride, 9,10-dihydro-8α,10α-diazaphenanthrene dibromide, 3-amino-1,2,4-triazole, and symmetrical triazines falling under the formula 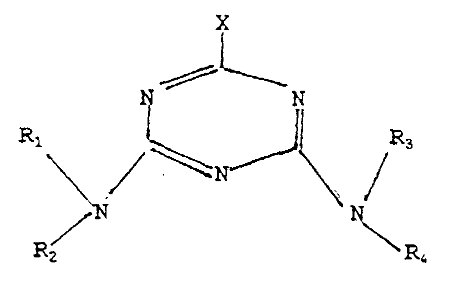 in which X is chlorine, methoxy or methylthio, R₁, R₂, R₃ and R₄ are the same or different and are each hydrogen or an alkyl residue containing 1-5 carbon atoms in branched or straight chain and optionally bearing a methoxy group.

The cores can comprise a mixture of two or more of the above elements.

In most cases, the core can also contain certain inert material. These materials include, but are not necessarily limited to, dried clay, calcium carbonate, brick, pumice, pyrophyllite, sulfur, kaolin, dolomite, plaster, wood flour, sugars, sodium chloride or sodium sulfate.

As indicated above, fertilizer cores are available in granule or prill form. For this invention, uncoated fertilizer products in these forms are readily available and are suitable for coating according to this invention.

As mentioned above, there is a first coating layer which encapsulates the core and which is intermediate to the core and the second coating layer described later below. The first layer should be able to release water soluble agent(s) from the core at a controlled rate desired for the particular application contemplated. For instance, if the agent is a fertilizer, the rate at which the agent is released should be such that the vegetation being fertilized is sufficiently nourished. The term "rate of release" of the agent refers to the rate at which the agent is released from the outer surface of the first coating layer. Coatings with such controlled release rates are well known in the art. See U.S. Patent 3,223,518, the contents of which are incorporated by reference. Suitable controlled release rates can be as high as 55% release of the core in 24 hours or as low as 0.05% release of the core in 120 hours. The preferred rate will depend on the application of the fertilizer.

Materials suitable for preparing the first coating layer include organic film forming thermoplastic or thermosetting compounds such as linseed oil; bodied linseed oil; copolymer oils such as dicyclopentadiene copolymer of bodied or unbodied linseed oil; long, medium and short oil alkyds; varnishes; phenol formaldehyde resins, furfuryl alcohol resins; urea formaldehyde resins; butadiene linseed oil copolymers; dicyclopentadiene soybean oil copolymers; dicyclopentadiene soybean oil copolymers wherein the soybean oil has been modified by reaction with maleic anhydride and pentaerythritol; mixtures of dicyclopentadiene linseed oil copolymers and dicyclopentadiene soybean oil copolymers; resin modified alkyds; heat treated or blown oils; alkyds prepared from isophthalic acid materials at various drying oil lengths; silicone alkyds; copolymer alkyds prepared from dicyclopentadiene, styrene, acrylates, and the like; esters of rosin, glycerol, pentaerythritol and other polyols; depolymerized Congo resins and esterification products thereof; phenolic and modified phenolics; modified maleic resins; coumarone-indene resins; terpene resins; petroleum resins, synthetic latices of polymers such as polyvinyl chloride, polyacrylate, polymethacrylate, polyvinyl acetate, copolymers of vinyl acetate and vinyl chloride, butadiene-styrene copolymers, butadiene-acrylonitrile copolymers, vinylidene chloride-vinyl chloride copolymers; melamine formaldehyde; mixed urea-melamine formaldehyde; nitrocellulose; cellulose acetate; ethyl cellulose; condensation products of fatty dimer or trimer acids with diamines; epoxidized materials cured with acids, half esters or anhydrides; condensation products of epichlorohydrin and bisphenol cured with a polyamine; polyesters such as the reaction products of dibasic acids, glycols and styrene; polysiloxane such as the reaction products of silicone chloride with fatty alcohols and other alcohols; petroleum and coal tar pitches and asphalts forming resins when modified with drying and bodied drying oils, or "Epon", etc. Coatings from one or more film forming organic solids melting above 150°F (65°C), such as paraffin, natural and synthetic waxes which may be blown or modified, fatty keto esters, dodecyl allophonate, triglycerides of hydroxy stearate of hydrogenated castor oil, polyvinyl stearate, and high melting polyethylenes are also useful. In addition, coatings prepared from molten sulfur are suitable. The first coating layer can be applied by conventional incremental or continuous coating techniques.

The amount (thickness) of first coating layer present will depend on several factors. Because the coating thickness of the first layer will have a significant effect on the release rate, the desired release rate will primarily determine the amount of the first coating. The amount of coating suitable for the desired rate can be obtained through any one of the coating methods described above. Generally, the thicker the coating, the slower the rate. As shown in the Examples which illustrate accelerated testing, the release rate is also influenced by the temperature at which the coated product is used. Generally, the higher the temperature the faster the rate.

The amount of the first coating used will also depend on other factors, including, but not necessarily limited to, the degree of solubility of the water soluble agent to be coated and the surface area of the agent. Amounts of 0.5 to 30%, preferably about 2 to 6%, by weight of the agent are typically suitable for this invention.

The release from such coatings is usually initiated after exposure to moisture which causes the osmotic pressure within the coating to increase to a point where the coating ruptures. The coating is further formulated and designed so that upon rupture, a controlled release of agent occurs. Generally, no more than a week elapses from the time of initial exposure to moisture to the time water soluble agent is released from the first coating.

Precoated prills or granules- having a coating layer described above are readily available as Osmocote® fertilizers from Grace-Sierra, Inc. and are particularly suitable for use in this invention.

As indicated earlier, the second coating layer should have a low water vapor transmission rate. This feature is essential for delaying substantial release of the water soluble agent in the product's core. For instance, if the coating had a relatively high water vapor transmission rate, vapor would permeate the product relatively quickly, thereby causing pressure to build up rapidly within the product. At some point the internal osmotic pressure will be high enough to cause the second coating to crack and disintegrate, thus exposing the first layer. Shortly thereafter, and thus shortly after the initial exposure to moisture, the product would begin to release the agent. In effect, a product coated with a high water vapor transmitting material would have a controlled release rate essentially the same as a product coated only with the first layer.

On the other hand, by using a second coating having a relatively low water vapor transmission rate, i.e. equal to or less than 2.5g/m²/day, as measured by ASTM E96-80, osmotic pressure within the product builds up slowly. It is only after one month or later that the pressure is sufficient to rupture the second coating, thereby creating the onset of release. As indicated earlier, once substantial release is initiated, its rate would parallel with the release rate from the first layer if used alone.

For the most part the vapor transmission rate is affected by the resin used to make the coating and the coating's thickness. For example, a certain thickness of vinylidene chloride copolymers has a lower vapor transmission rate than a polyethylene coating of the same thickness. Even further, thicker coatings provide for lower water vapor transmission rates. Accordingly, the resin selected for the coating and amount (thickness) of coating should be sufficient to provide a water vapor transmission rate equal to or less than 2.5g/m²/day. An even more preferred rate is 1.0g/m²/day or less. Amounts of 3% by weight of the water soluble agent are particularly preferable for most resins, but can be lower, e.g. 1% by weight, for others, e.g. poly(vinylidene chloride) copolymers.

Layers having water vapor transmission rates appropriate for the second coating can be prepared from various thermoplastic resins. Such resins include, but are not necessarily limited to, aromatic vinyl compounds such as polystyrene, and copolymers thereof such as poly(styrene-acrylonitriles), acrylonitrile-butadiene-styrene polymers; amides such as acrylamide and methacrylamide; polyamide-imides; polyimides; aliphatic dienes such as polybutadienes; polymers prepared from unsaturated carboxylic acids such as (meth)acrylic acid, crotonic acid, fumaric acid and itaconic acid, salt or esters thereof; polyolefins such as low density polyethylene, medium density polyethylene, high density polyethylene, atactic (amorphous) polypropylene, isotactic (crystalline) polypropylene, ethylene-propylene copolymer, propylene-butylene copolymer; polyvinyls prepared from halogen substituted vinyl compounds such as vinyl chloride, vinylidene chloride, vinyl fluoride, vinylidene fluorides; polyacrylonitriles; polyethylene-terephthalates; polybutylene-terephthlates; polyacetals; cellulose esters; polyurethanes; polyacrylates; vinyl carboxylic esters such as vinyl acetate; and polyaryl ethers.

Vinylidene chloride-based thermoplastics are particularly preferable, especially copolymers with acrylates, methacrylates and acrylonitrile.

The second coating is applied after the first coating layer has been cured and can be applied by conventional coating techniques, such as pan or fluidized bed coating techniques. The second coating can also be the result of one or more applications of the resins described above, as more fully described in U. S. Patent 4,019,890, the text of which is incorporated herein by reference as if set forth in full.

As is apparent from the above, the invention can be prepared by providing a coating (b) onto fertilizer products already provided with a coating (a), e.g. Osmocote® fertilizer available from Grace-Sierra Horticultural Products. By providing coating (b) on such products the onset of release can be delayed well beyond the week delay typically exhibited by those commercial products. Accordingly, this invention allows one to prepare a delayed release product simply by applying the second coating (b) to products having a preexisting coating.

For many fertilizer products, it is preferable that substantial release of fertilizer is delayed until at least a month and sometimes as long as one or two years. For instance, such fertilizers would be beneficial for the seedlings which typically do not require fertilizer during the first year after planting.

For this invention, substantially "delayed" release occurs when no more than about 10% of the fertilizer product is released after a month or more from the time the product is applied. After one month or more, the onset of release occurs, with the release rate of the product being the release rate of the first coating when used alone. In some instances, up to about 10% of the agent is "released" from the product in less than a month because of insufficient initial coatings. Therefore, such release should not be considered as onset of release and would be better considered as "background" release which will usually not affect the target of the product.

In the agricultural industry, delayed, controlled release is particularly advantageous. For many agricultural products, seeds are planted during spring, with fertilizer usually laid down at a later time. If a delayed, controlled release fertilizer product is employed, the fertilizer and seed can be distributed at the same time. Such products would allow the simultaneous application of seed and fertilizer with little harm to the crop in its early stage of development because of the initial delay in release of the fertilizer. However, the release is only delayed as long as the second coating is intact. When that layer disintegrates, onset of substantial release will occur, with the release rate coinciding with the rate of the first coating. Typically, the first coating will deliver fertilizer at the maximally effective rate.

Another aspect of this invention is that a product can be made that provides a moderate initial nutrient release followed by a longer-term, fairly constant nutrient release. The amount of the initial nutrient release varies with the thickness of the inner coating and the temperature at which the second coating is applied. The longevity of the product may be varied by changing the thickness of the outer coating and its water vapor transmission rate.

In this procedure the substrate prills are first coated with prepolymer of dicyclopentadiene and a vegetable oil such as linseed oil or soybean oil until the coating weight is approximately 1-12%, preferably 2-6% of the weight of the prills. The second polymer coating is applied in the range of 0.5-10%, preferably 1-5% by weight of the prills using an aqueous emulsion resin with very low water vapor transmission. The aqueous emulsion could be made of vinylidene chloride/acrylate(methacrylate) type of copolymer. The second coating can be applied from 30-55°C; the lower the coating temperature the higher the initial release. During the application of the second coating some of the nutrient are dissolved in the leftover water of the coating particle. The soluble materials thus get embedded into the polymer matrix and therefore act as pore formers in the coating. This means that pore formers can be introduced into the polymer matrix in situ. The initial release can be controlled by controlling the thickness of the inner or outer coatings. The longevity of the product is varied by varying the water vapor transmission and/or the thickness of the outside coating. As a result, variables introduced into a single manufacturing process w(which applies two coatings) can be used to produce a variety of products which meet the specific nutrient requirements of different crops.

If the initial coating is thicker, then the second coating provides a product which releases no nutrient initially and the release of the substrate is delayed.

In the alternative, a pattern can be established where no nutrients are provided to the plant at a time when the plant is dormant. Blending of delayed release products with conventional controlled release products can provide an "on-off-on" "on-on" and "off-on" products. So, a nine month product can be prepared which release nutrients in the spring and fall, but not in the summer. This is a distinct advantage because the existing controlled release technology is heat sensitive and tends to over-release during the summer. A 1:1 blend of 3-4 month conventional Osmocote product available from Grace-Sierra and a 6-month delayed release product with a longevity of 3-4 months could be applied in the spring. The nutrient release would occur in spring and fall with very little release during the summer period. During the summer plants are close to dormant and therefore do not take up nutrients to any great degree. At this stage, it is possible to harm the plants by excess release of nutrient salts. Also, the excess can be washed by rain water into rivers and lakes. Naturally, it would also be possible to apply the type of product in the fall, to provide nutrient release in the fall and spring only.

According to one aspect of the invention a controlled release product comprising the delayed release product of the invention provides three-phase release of active ingredient.

In one embodiment the active ingredient is releasable during a first period of about three months at a rate of 1 to 2g nitrogen/Month/0.028m³ (1 to 2g nitrogen/month/ft³); during a second period of about three months at a rate of 4 to 5g nitrogen/month/0.028m³ (4 to 5g nitrogen/month/ft³); and during a third period of 1-2 months at a rate of 2.5 to 3.5g nitrogen/month/0.028m³ (2.5 to 3.5g nitrogen/month/ft³).

In an alternative embodiment the active ingredient is releasable during a first period of about two months at a rate of 523.18g/m³ to 1307.95 g/m³ (400 to 1,000g nitrogen/yd³); during a second period of about two months at a substantially reduced rate and during a third period of about two months at a rate of 392.39g/m³ to 915.57g/m³ (300-700g nitrogen/yd³).

In yet another embodiment of this invention, a fertilizer nutrient system can be provided that is custom tailored to the needs of various crops. By incorporating delayed release products with the existing nutrient feed systems, one can provide specific nutrients to the plants at a definite time. For example, a high dose of potassium can be delivered to plants during the flowering stage.

While the invention is described with preferred embodiments, it is to be understood that variations and modifications may be resorted to as will be apparent to those skilled in the art. Such variations and modifications are to be considered within the purview and the scope of the claims appended hereto.

### Example 1

Urea prills, 50g, which had been coated with a linseed oil/dicyclopentadiene copolymer at approximately 11% by weight of the prills were heated to 80-90°C in a fluidized bed coater. An aqueous emulsion of DARAN® SL-159 poly(vinylidenechloride/acrylate) from Organic Chemicals Division of W. R. Grace & Co.-Conn. was added at 1, 2 & 3% based on the prill weight. The coatings contained 10% (based on coating weight) talc to reduce prill agglomeration. The release profile of the dual coated product was then tested alongside the linseed oil/dicylcopentadiene copolymer coated fertilizer described above. To measure the release profile of the coated fertilizers, 3.0 g coated fertilizer is mixed with 500 g of sand and placed in a filter funnel. The mixture is then wetted with 75 ml of deionized water, sealed, and the apparatus is placed in an oven at 50°C (accelerated test). At 24 hour intervals, the water containing the dissolved urea is filtered off. The sample/sand mixture is rinsed with 50 ml of pure deionized water and the two aliquots are combined. The solution concentration is then measured calorimetrically using the Blood Urea Nitrogen (BUN) assay. By dividing this value by that obtained for the maximum concentration (i.e. 3.0 g urea/125 ml), the percentage release is determined. As illustrated in Figure 1, the release profiles are significantly altered, thus providing an ability to tailor release to specific applications.

### Example 2

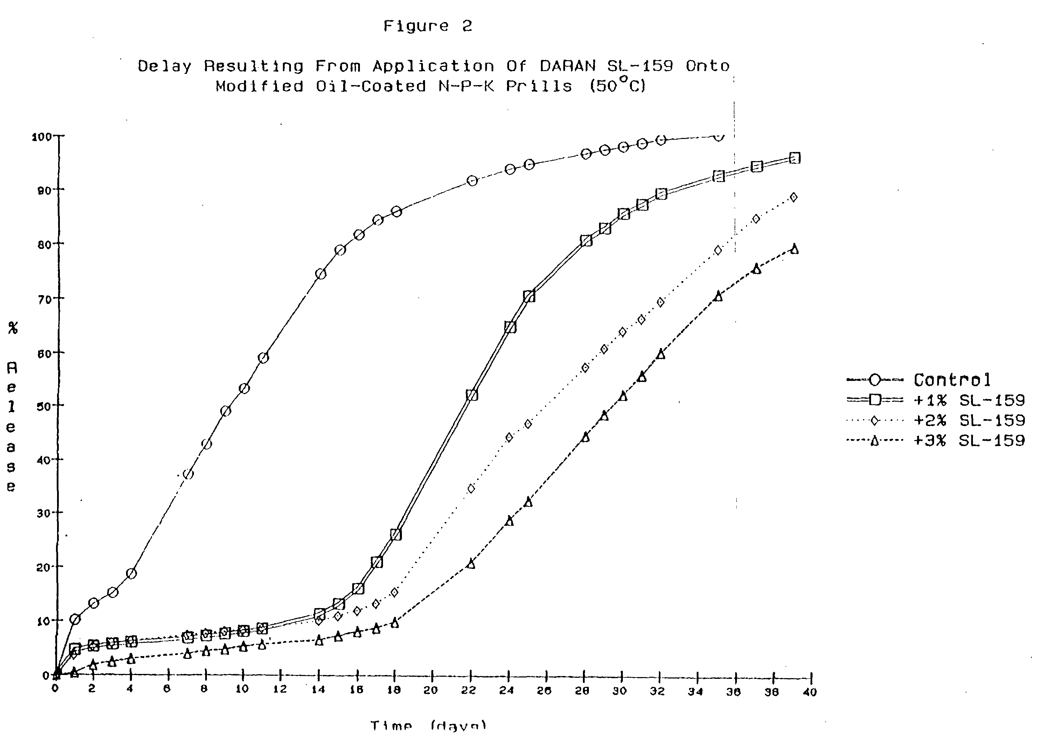

A linseed oil/dicyclopentadiene-coated NPK 17-7-12 fertilizer from Grace-Sierra Horticultural Products Co. was coated in the manner described in Example 1. Based on accelerated testing similar to that described in Example 1, samples without the emulsion coating released 60% of their nutrients in eleven days, where the 1, 2 & 3% emulsion coatings of the invention have released 9, 9 & 6%, respectively. See Figure 2. The release profile of the NPK product was measured using the same preparation method described above, except that the solution concentrations were determined by conductivity measurement.

### Examples 3 - 6

Coated NPK 17-7-12 fertilizer samples described in Example 2 were coated in the same manner as that described in Example 2 except the following copolymers were applied in an amount of 3% by weight of the fertilizer product as a substitute for DARAN® SL159 copolymer.
- Example 3:: DARAN® 8680 poly(vinylidene chloride/methacrylate/methyl methacrylate) from the Organic Chemical Division of W. R. Grace & Co.- Conn.
- Example 4:: DARAN® 229 poly(vinylidene chloride/methacrylate/methyl methacrylate) from the Organic Chemical Division of W. R. Grace & Co.- Conn.
- Example 5:: DARAN® SL-143 poly(vinylidene chloride/methacrylate/methyl methacrylate) from the Organic Chemical Division of W. R. Grace & Co.- Conn.
- Example 6:: DARAN® SL-112 vinylidene chloride/methyl methacrylate/acrylonitrile

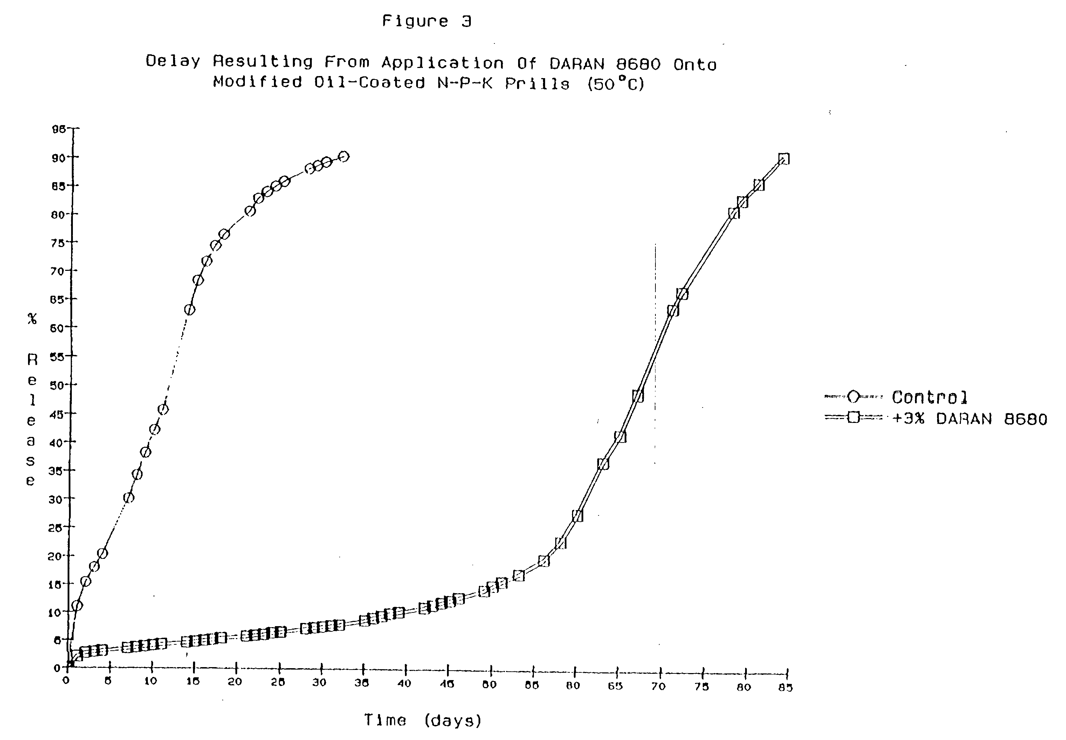

The release profiles of the resulting coated fertilizer products were then measured using the techniques described in Example 2 above. These profiles are provided in Figures 3 - 6 for Examples 3 - 6 respectively.

### Example 7

### Coating of Fertilizers Prills Containing NPK

NPK prills of the composition 15-15-15 (15% N, 15% P₂O₅ and 15% K₂O) that had been coated with linseed oil/dicyclopentadiene copolymer at approximately 3% by weight of the prills were heated in a fluidized bed at 80-90°C. An aqueous emulsion of poly(vinylidenechloride/acrylate) was added at 1, 1.5 and 2% based on the prill weight. The bed temperature dropped down to 50-55°C soon after the aqueous emulsion was first applied. The temperature was maintained at approximately 50°C during the coating which took about 15 minutes. The testing was carried out in an accelerated sand leach test at 50°C. The release of the nutrient was monitored by determining conductivity of the leachate.

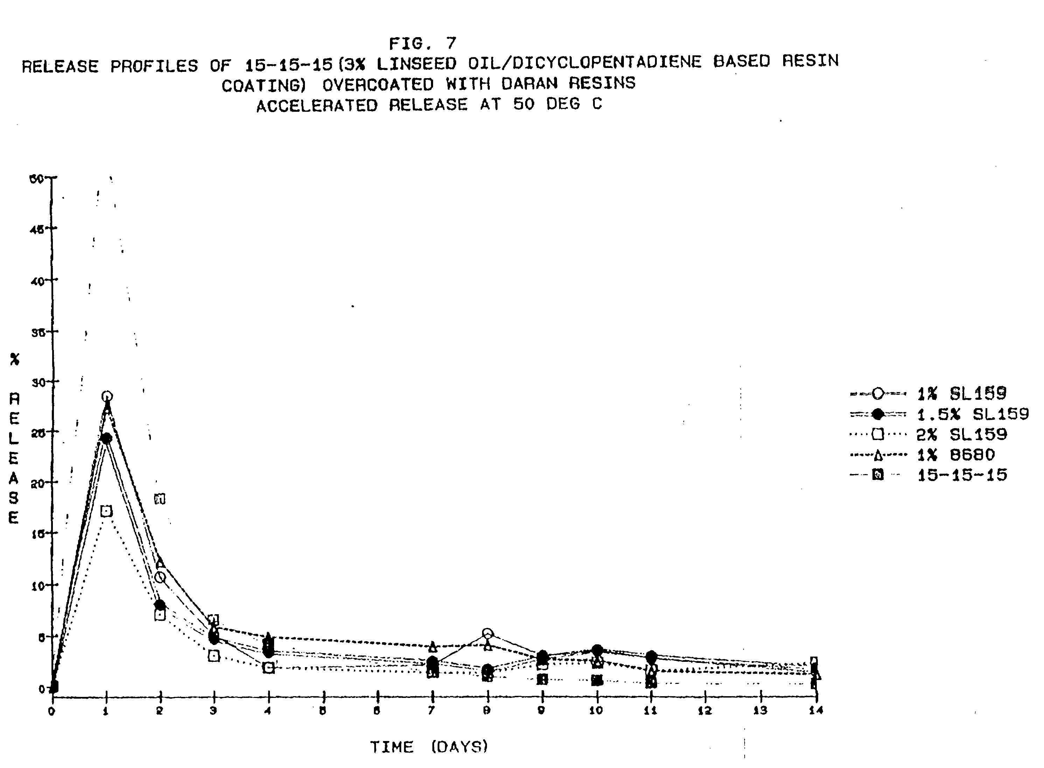

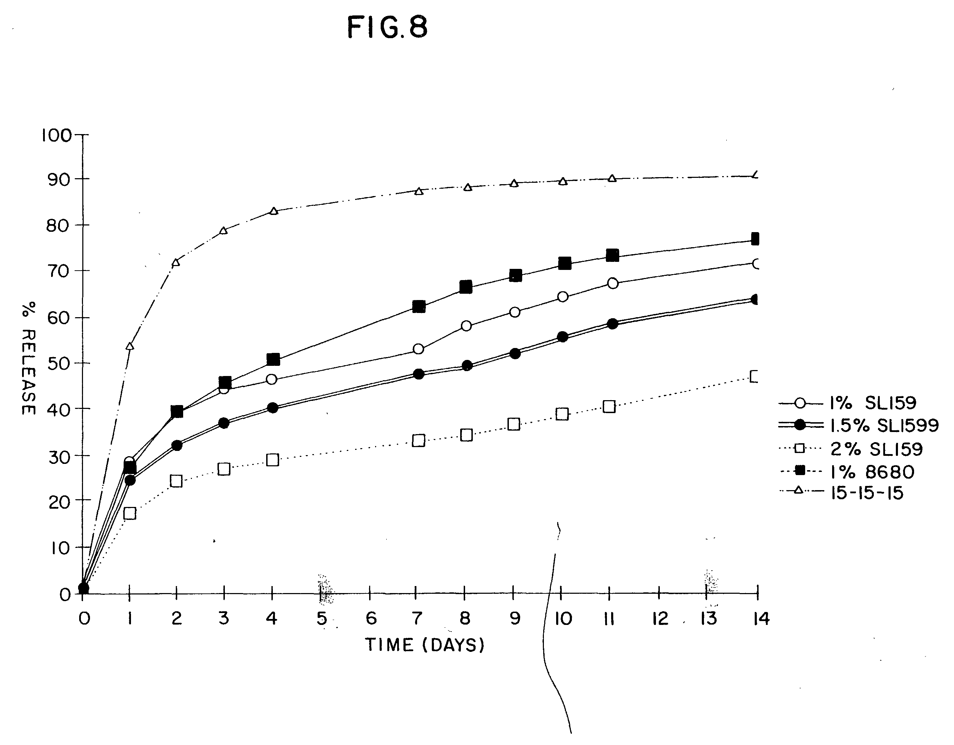

The release profiles were significantly altered. This demonstrates the ability to obtain a moderate to high initial release followed by a low, relatively constant release. That is, one can select an initial level of of release as well as a period of longevity. Figure 7 shows a daily release profile, i.e., percentage of the total amount of releasable nutrients contained in each separate sample, for the control ("15-15-15" - 3% linseed oil/dicyclopentadiene copolymer coating only) and various levels of the second coating. Figure 7 shows that the initial release can be reduced from about 54% (control: no second coat) to 17% (2% coating SL159). The lower initial release is coupled with a different long term release. What appear to be slight differences in Figure 7 with respect to long term release are nonetheless significant to the plants and are better illustrated in Figure 8.

Figure 8 shows the same results as cumulative release. For the purposes of this analysis, release is considered to be substantially complete when the cumulative total reaches 80%. Thus, one can see that the control is fully depleted within about three days, while a 1% added coating has only 50% release at three days. The material with the 1% added coating had only reached about 75% release after 14 days. It is clear that after the initial release of high nutrient concentration the release rates slow down and the product with longevity of 3, 6, 9 or 12 months can be prepared.

### Example 8

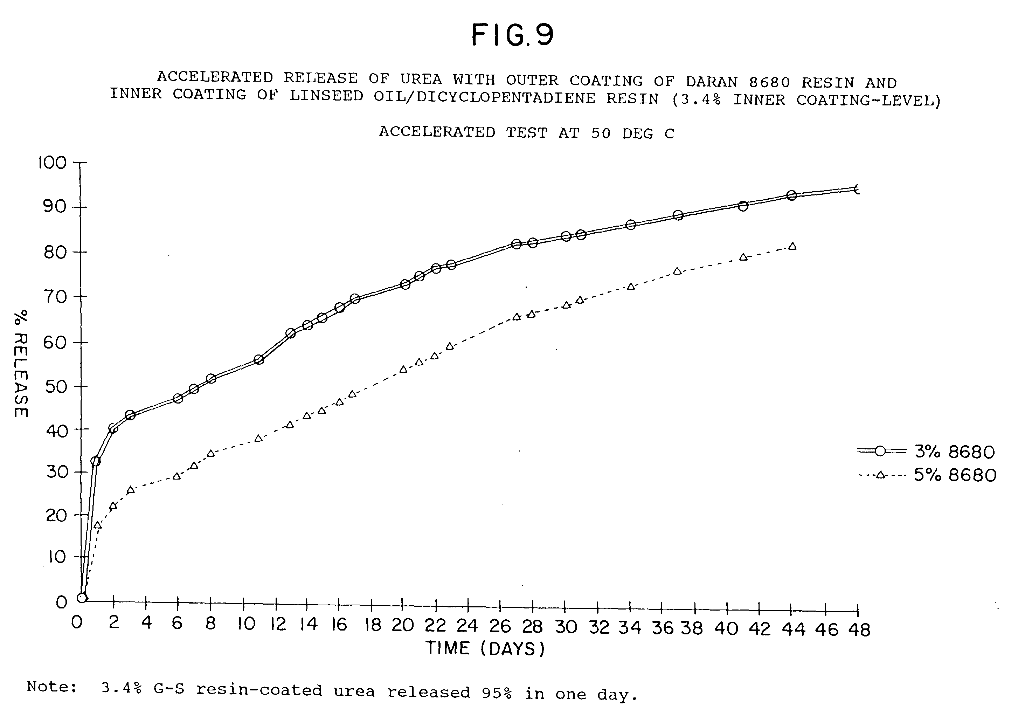

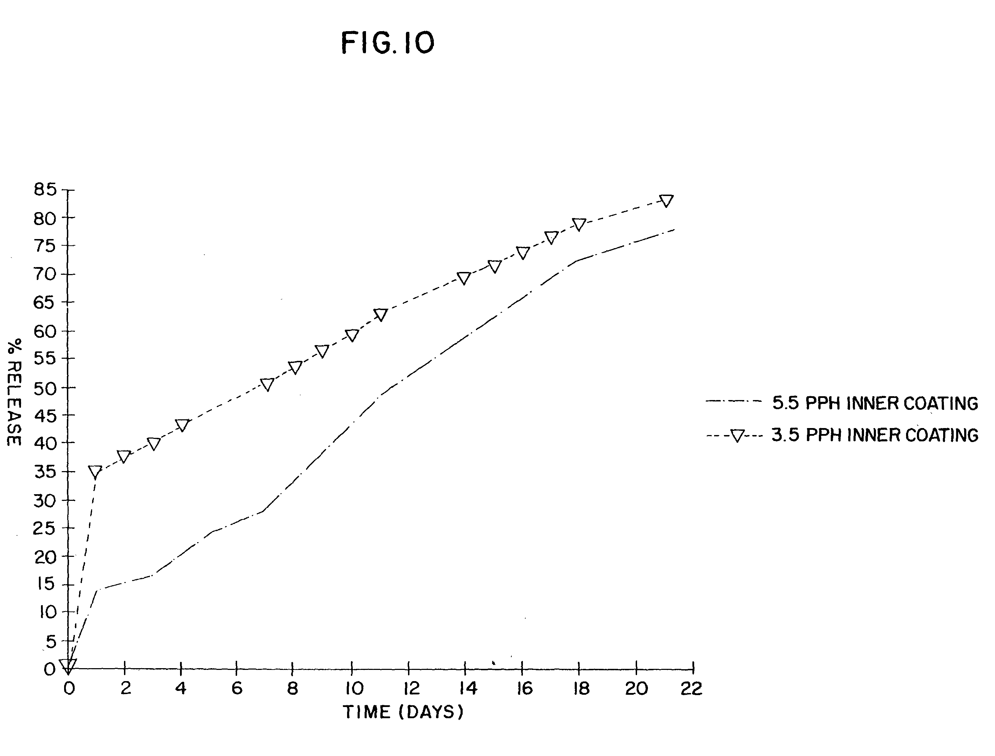

The identical conditions were employed to coat urea product having linseed oil/dicyclopentadiene based coating level of 5.5 parts of coating per hundred parts fertilizer by weight ("pph") with aqueous emulsion at the level of 3 and 5% pph. The accelerated release profile is shown in Figure 9. Again, the release pattern for these products is similar to the one seen for products of Example 7, where initial high release is followed by a slow zero order (linear or constant rate) release for both the products to provide products with extended longevity. The release profile for the two products is almost parallel after the initial release. Thus the amount of initial release can be controlled by changing the thickness of outer layer. Identical conditions were used to coat the urea product with linseed oil/dicyclopentadiene based level coating of 5.5 pph with aqueous emulsion of Daran ^{R}8680 at a level of 3%. The accelerated release profiles of products of 3.5 and 5.5 pph levels of inner coating and a level of 3% outer coating are shown in Figure 10. Again, the effect of increasing the total coating weight is to suppress the amount of initial release, but in this case as the thickness of the inner coating is varied the slope of the two curves after initial release are also varied. With both products the release profile after initial release is again nearly linear, or of zero order. Thus by controlling the thickness of the outer coating and inner coating, the initial release and the release rates can be varied to prepare products for use in nursery, greenhouse, turf and vegetation grown in various climates. Thus a product can be prepared for use in turf which can be applied in March and will last for the whole season. This product will have initial high release on the order of 360-720g nitrogen per 92.9m² per Month (360 - 720g nitrogen per 1,000 square feet per month) for quick greening of the lawn followed by slow release on the order of 100-250g nitrogen per 92.9m² per Month (100 - 250g nitrogen per 1,000 square feet per month) for 6 - 9 months. After the initial period the release rate would be at a low, constant rate so that enough urea is released to keep the grass green but the growth of the grass is relatively slow, and mowing intervals are longer than the practice used presently.

One of ordinary skill in the art will recognize that the rate of release measured in grams of nitrogen is merely a convenient form of measurement used in the industry. In principle, the rate of release can refer to any active ingredient.

### Example 9

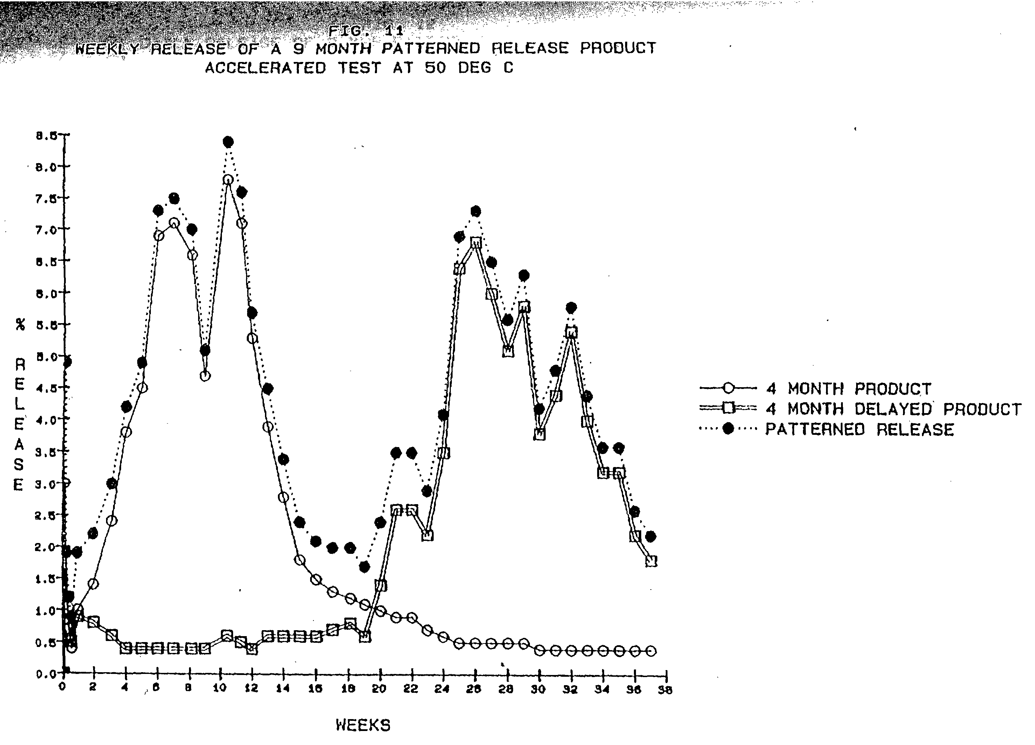

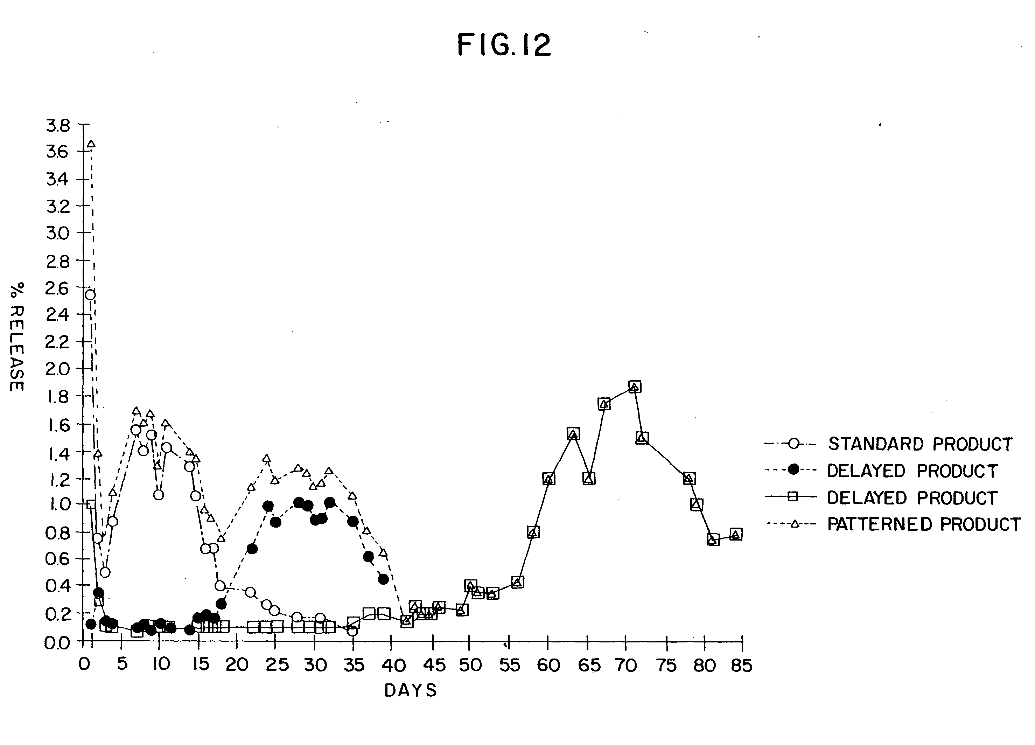

**Patterned Release Product:** An ideal controlled release product would be the one that responds to the needs of the plant. An ideal product for a grower would be one that responds to the needs of the plant and could be introduced into the soil during the potting of the plants. Some growers pot so many plants that it is labor intensive to top dress, or add fertilizer to the container, after the first potting. Thus for example it may take up to 2 months for three people to top dress in the fall after potting in the spring. Because the cost involved in top dressing in the Fall this method is not followed and a nine-month product to carry over to the fall is employed. Thus an ideal product should respond to plant need and have a longevity of the whole season (or one year). If potting is to be carried out in the spring, an ideal fertilizer should release nutrients during the spring with a low level of release during the summer season and high level of nutrient release again during the fall. The product would need to supply the nutrient requirement of the plant for nine months. Most commercial products release the majority of the nutrients in the early part of its lifetime. If these are to be used during Spring potting, the nutrient release occurs during the Spring and Summer with the residual amount releasing during the Fall. A majority of the nutrients tend to release more heavily during the Summer when the temperatures are high. Actually, many plants require a very small amount of nutrient during the Summer because plants become dormant due to the heat, and, in fact, a large amount of nutrient release could hurt plants. Also, the excess tends to be washed away by rainwater and causes environmental problems. A useful product can be prepared by blending a standard controlled release Osmocote type product available commercially and a delayed release product. Such a product can be prepared by using delayed release products described in Example 2. Figure 11 shows the weekly release profile at 32.2°C (90°F) (average use temperature in Florida) for such a blend. For example, if the plants were potted in March, the maximum release on the order of 523.18 to 523.18 to 1307.95 g/m³ (400 to 1,000g nitrogen per cubic yard) would occur in week 5 - week 12 (April - May) and by the 16th week (end of June) the release of nutrient would be lowest and will stay that way for 8 weeks (July - August) before it increases to a maximum on the order of 392.39 to 915.57 g/m³ (300 - 700g nitrogen per cubic yard) for another 8 weeks (September-October) and then drops during the next 4 - 5 weeks (November). Such a product would be highly desirable to the nurserymen and would also be a more environmentally benign products Blending of delayed release products can be similarly extended to 1-1/2-year or 2-year products. In Figure 12 is shown the release profile at 50°C of a blend of two delayed release products and a standard Osmocote product to prepare a two-year product. The delayed release products are used from Example 2 and Example 3.

### Example 10

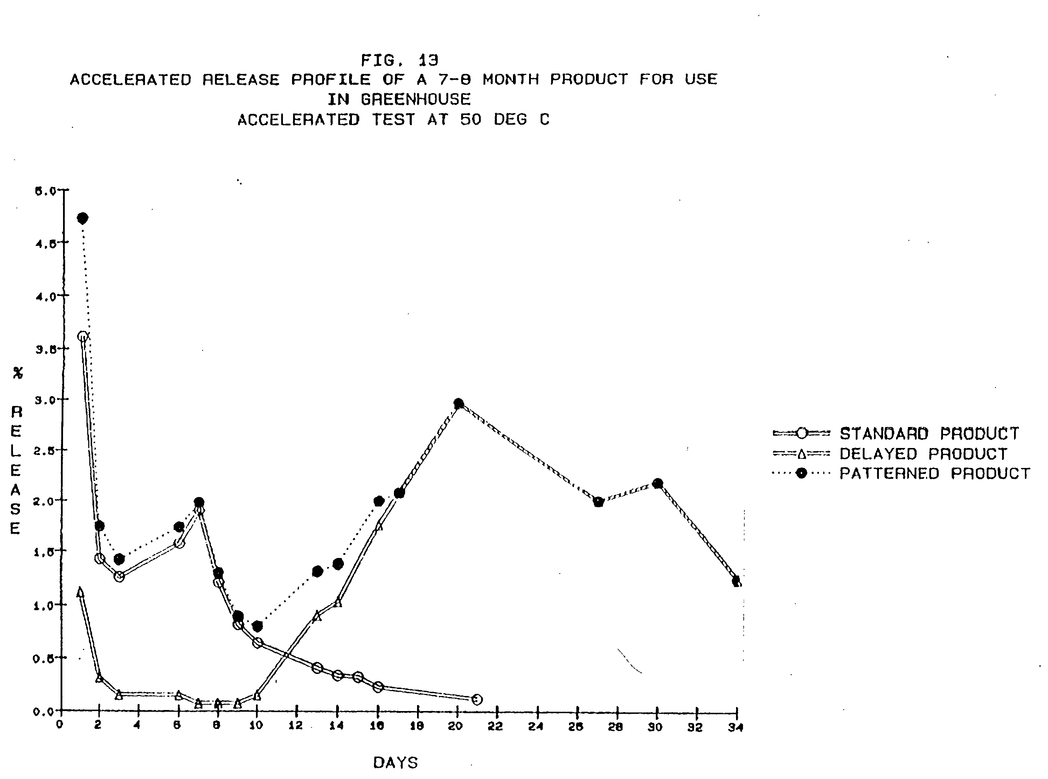

Flowering annuals are grown in the greenhouse from seeds or cuttings for three months and are put in baskets before they are sold to the stores. These plants stay in the store for a short period of time while they are sold to the consumer who keeps it for 4 - 5 months. The nutrient requirements for such a plant are different at different stages of its growth. For example, during the three months in the greenhouse, the plant needs only a third of the nutrients compared to that needed for the next three months when it is with consumer, and the requirements for the month 7 and month 8 are again lower than months 4 - 6. An ideal product for such a use will be one time added product which is mixed in the soil during the potting. Thus neither the retailer nor the consumer has to worry about adding fertilizer after the plant is bought. A blend of delayed release product similar to one described in Example 2 and a standard Osmocote type product would provide the ideal product to be used in the greenhouse for annuals. This blend will consist of 20% by weight of a 3-month standard Osmocote product and 80% of 4 - 5 month delayed release product with delay of 3 months. According to Figure 13, this product when used in March would supply the active ingredient during three distinct periods at rates having ratios of about 1:3:2, i.e., 0.5g nitrogen/pot/month for first three months, the level of nutrient would be 1.5g nitrogen/pot/month for the next three months (June-August) and 1.0g nitrogen/pot/month for September and October. In this case a pot would be something on the order of a 254 mm (10-inch) hanging basket, and nominally has a volume of about 9.6x10-³m³ (0.34 ft³). This product is somewhat different in requirement than that described in Examples 10 and 11 where the maximum amount of nutrients are needed during the Summer since the plant is at the maximum growth stage in its cycle and the consumer adds water more often than the grower of perennials or ornamentals in a nursery.

## Claims

1. A delayed, controlled release product comprising:
(a) a core comprising a water soluble active ingredient;
(b) a first coating layer on the surface of the core (a), wherein said layer has the ability to release the active ingredient at a controlled rate; and
(c) a second coating layer encapsulating (a) and (b) having a low water vapour transmission rate;
whereby said second coating layer (c) causes substantial release of the active ingredient to be delayed for at least four weeks from initial exposure of the product to moisture and, once substantial release is initiated, the rate of release corresponds essentially to that controlled by the first coating layer (b) alone.

2. A product according to Claim 1, wherein the active ingredient is biologically or horticulturally active agent.

3. A product according to Claim 2, wherein the active ingredient is selected from the group comprising plant nutrients, pesticides and herbicides.

4. A product according to Claim 3, wherein the active ingredient is urea or sulfur-coated urea.

5. A product according to any one of the preceding claims, wherein the second coating layer (c) which encapsulates the first coating layer (b), has a water vapour transmission rate of 2.5 g/m²/day or less.

6. A product according to Claim 5 wherein the second coating layer has a water vapour transmission rate of 1.0 g/m²/day or less.

7. A product according to any one of the preceding claims, wherein the first coating layer (b) is a vegetable oil/dicyclopentadiene copolymer.

8. A product according to any one of the preceding claims wherein the second layer (c) is a vinylidene chloride-based thermoplastic.

9. A product according to Claim 8 wherein the vinylidene chloride-based thermoplastic is selected from the group comprising vinylidene-chloride/acrylate polymers and copolymers, vinylidene-chloride/methyl acrylate/methyl methacrylate polymers and copolymers, and vinylidene-chloride/methyl methacrylate/ acrylonitrile polymers and copolymers.

10. A product according to any one of the preceding claims wherein the first coating layer (b) comprises up to 12% by weight of the product; and the second coating layer (c) comprises up to 10% by weight of the product.

11. A product according to Claim 10 wherein the first coating layer (b) comprises 2-6% by weight of the product; and the second coating layer (c) comprises 1-5% by weight of the product.

12. A controlled release product comprising an active ingredient and a carrier, wherein the active ingredient is releasable to the environment during at least three periods of release which product comprises a delayed controlled release product according to any one of the preceding claims.

13. A product according to Claim 12 wherein active ingredient is releasable to the environment during the periods of release at rates having ratios of 1:3:2.

14. A product according to Claim 12 or 13 wherein the active ingredient is releasable during a first period of about three months at a rate of 1 to 2g nitrogen/Month/0.028m³ (1 to 2g nitrogen/month/ft³); during a second period of about three months at a rate of 4 to 5g nitrogen/month/0.028m³ (4 to 5g nitrogen/month/ft³); and during a third period of 1-2 months at a rate of 2.5 to 3.5 nitrogen/month/0.028m³ (2.5 to 3.5g nitrogen/month/ft³).

15. A product according to Claim 12 wherein the active ingredient is releasable during a first period of about two months at a rate of 528.18g/m³ to 1307.95 g/m³ (400 to 1,000g nitrogen/yd³); during a second period of about two months at a substantially reduced rate; and during a third period of about two months at a rate of 392.39g/m³ to 915.57g/m³ (300-700g nitrogen/yd³).

16. A product suitable for delayed, controlled release of a water soluble active ingredient wherein the product comprises
(a) a core comprising at least one water soluble active ingredient;
(b) a first coating layer which is intermediate to (a) and layer (c), wherein said layer has the ability to release active ingredient at a controlled rate; and
(c) a second coating layer which encapsulates (a) and (b) wherein said layer (c) has a water vapor transmission rate of 2.5g/m²/day or less.

17. A product according to Claim 16 wherein substantial release of the water soluble active ingredient is delayed at least four weeks.

18. A product according to Claim 16 or 17 wherein
(b) is a vegetable oil/dicyclopentadiene copolymer; and
(c) is selected from the group comprising vinylidene-chloride/acrylate polymers and copolymers, vinylidene-chloride/methyl acrylate/ methyl methacrylate polymers and copolymers, and vinylidene-chloride/methyl methacrylate/ acrylonitrile polymers and copolymers.

19. A product according to Claim 16 or 17 wherein
(b) is sulfur; and
(c) is selected from the group comprising vinylidene-chloride/acrylate polymers and copolymers, vinylidene-chloride/methyl acrylate/methyl methacrylate polymers and copolymers, and vinylidene-chloride/methyl methacrylate/acrylonitrile polymers and copolymers.

20. A product according to any one of Claims 16 to 19 wherein
(b) is up to 12% by weight of the product; and
(c) is up to 10% by weight of the product.

21. A product according to Claim 20, wherein
(b) is 2-6% by weight of the product; and
(c) is 1-5% by weight of the product.

22. A method of delaying the controlled release of a water soluble active ingredient wherein the method comprises employing a product comprising
(a) a core comprising at least one water soluble active ingredient;
(b) a first coating layer which is intermediate to (a) and layer (c), wherein said layer has the ability to release the active ingredient at a controlled rate; and
(c) a second coating layer which encapsulates (a) and (b), wherein said layer (c) has a water vapor transmission rate of 2.5g/m²/day or less.

## Patentansprüche

1. Produkt mit verzögerter, regulierter Freisetzung, umfassend:
(a) einen Kern, umfassend einen wasserlöslichen aktiven Bestandteil;
(b) eine erste Überzugsschicht auf der Oberfläche des Kerns (a), wobei die Schicht die Fähigkeit besitzt, den aktiven Bestandteil mit einer regulierten Rate freizusetzen; und
(c) eine zweite Überzugsschicht, die (a) und (b) einkapselt, mit einer niedrigen Wasserdampf-Durchlaßrate;
wobei die zweite Überzugsschicht (c) eine beträchtliche Freisetzung des aktiven Bestandteils bewirkt, welche mindestens vier Wochen ab Beginn der Exponierung des Produkts an Feuchtigkeit verzögert wird, und, nachdem eine beträchtliche Freisetzung eingesetzt hat, die Freisetzungsrate im wesentlichen der durch die erste Überzugsschicht (b) allein regulierten entspricht.

2. Produkt gemäß Anspruch 1, wobei der aktive Bestandteil ein biologisch oder im Gartenbau wirksames Mittel ist.

3. Produkt gemäß Anspruch 2, wobei der aktive Bestandteil gewählt ist aus der Pflanzennährsubstanzen, Pestizide und Herbizide umfassenden Gruppe.

4. Produkt gemäß Anspruch 3, wobei der aktive Bestandteil Harnstoff oder schwefelbeschichteter Harnstoff ist.

5. Produkt gemäß mindestens einem der vorhergehenden Ansprüche, wobei die zweite Überzugsschicht (c), welche die erste Überzugsschicht (b) einkapselt, eine Wasserdampf-Durchlaßrate von 2,5 g/m²/Tag oder weniger besitzt.

6. Produkt gemäß Anspruch 5, wobei die zweite Überzugsschicht eine Wasserdampf-Durchlaßrate von 1,0 g/m²/Tag oder weniger besitzt.

7. Produkt gemäß mindestens einem der vorhergehenden Ansprüche, wobei die erste Überzugsschicht (b) ein Pflanzenöl/Dicyclopentadien-Copolymer ist.

8. Produkt gemäß mindestens einem der vorhergehenden Ansprüche, wobei die zweite Schicht (c) ein Thermoplast auf Vinylidenchlorid-Basis ist.

9. Produkt gemäß Anspruch 8, wobei der Thermoplast auf Vinylidenchlorid-Basis gewählt ist aus der Gruppe umfassend Vinylidenchlorid/Acrylat-Polymere und -Copolymere, Vinylidenchlorid/Methylacrylat/Methylmethacrylat-Polymere und -Copolymere und Vinylidenchlorid/Methylmethacrylat/Acrylnitril-Polymere und -Copolymere.

10. Produkt gemäß mindestens einem der vorhergehenden Ansprüche, wobei die erste Überzugsschicht (b) bis zu 12 Gew.-% des Produkts umfaßt; und die zweite Überzugsschicht (c) bis zu 10 Gew.-% des Produkts umfaßt.

11. Produkt gemäß Anspruch 10, wobei die erste Überzugsschicht (b) 2 - 6 Gew.-% des Produkts umfaßt; und die zweite Überzugsschicht (c) 1 - 5 Gew.-% des Produkts umfaßt.

12. Produkt mit regulierter Freisetzung, umfassend einen aktiven Bestandteil und einen Träger, wobei der aktive Bestandteil während mindestens drei Freisetzungsperioden in die Umgebung freisetzbar ist, wobei das Produkt ein Produkt mit verzögerter, regulierter Freisetzung gemäß mindestens einem der vorhergehenden Ansprüche umfaßt.

13. Produkt gemäß Anspruch 12, wobei der aktive Bestandteil während der Freisetzungsperioden in Raten mit Verhältnissen von 1: 3 : 2 in die Umgebung freisetzbar ist.

14. Produkt gemäß Anspruch 12 oder 13, wobei der aktive Bestandteil während einer ersten Periode von etwa drei Monaten in einer Rate von 1 bis 2 g Stickstoff/Monat/0,028 m³ (1 bis 2 g Stickstoff/Monat/ft³); während einer zweiten Periode von etwa drei Monaten in einer Rate von 4 bis 5 g Stickstoff/Monat/0,028 m³ (4 bis 5 g Stickstoff/Monat/ft3); und während einer dritten Periode von 1 - 2 Monaten in einer Rate von 2,5 bis 3,5 g Stickstoff/Monat/0,028 m³ (2,5 bis 3,5 g Stickstoff/Monat/ft³) freisetzbar ist.

15. Produkt gemäß Anspruch 12, wobei der aktive Bestandteil während einer ersten Periode von etwa zwei Monaten in einer Rate von 523,18 g/m³ bis 1307,95 g/m³ (400 bis 1000 g Stickstoff/yd³); während einer zweiten Periode von etwa zwei Monaten mit einer im wesentlichen verringerten Rate; und während einer dritten Periode von etwa 2 Monaten in einer Rate von 392,39 g/m³ bis 915,57 g/m³ (300 bis 700 g Stickstoff/yd³) freisetzbar ist.

16. Produkt, das für die verzögerte, regulierte Freisetzung eines wasserlöslichen aktiven Bestandteils geeignet ist, wobei das Produkt Folgendes umfaßt:
(a) einen Kern, umfassend mindestens einen wasserlöslichen, aktiven Bestandteil;
(b) eine erste Überzugsschicht, die zwischen (a) und der Schicht (c) liegt, wobei die Schicht die Fähigkeit besitzt, aktiven Bestandteil in einer regulierten Rate freizusetzen; und
(c) eine zweite Überzugsschicht, die (a) und (b) einkapselt, wobei die Schicht (c) eine Wasserdampf-Durchlaßrate von 2,5 g/m²/Tag oder weniger besitzt;

17. Produkt gemäß Anspruch 16, wobei eine beträchtliche Freisetzung des wasserlöslichen aktiven Bestandteils mindestens vier Wochen verzögert wird.

18. Produkt gemäß Anspruch 16 oder 17, wobei:
(b) ein Pflanzenöl/Dicyclopentadien-Copolymer ist; und
(c) gewählt ist aus der Gruppe umfassend Vinylidenchlorid/Acrylat-Polymere und -Copolymere, Vinylidenchlorid/Methylacrylat/Methylmethacrylat-Polymere und -Copolymere und Vinylidenchlorid/Methylmethacrylat/Acrylnitril-Polymere und -Copolymere.

19. Produkt gemäß Anspruch 16 oder 17, wobei:
(b) Schwefel ist; und
(c) gewählt ist aus der Gruppe umfassend Vinylidenchlorid/Acrylat-Polymere und -Copolymere, Vinylidenchlorid/Methylacrylat/Methylmethacrylat-Polymere und -Copolymere und Vinylidenchlorid/Methylmethacrylat/Acrylnitril-Polymere und -Copolymere.

20. Produkt gemäß mindestens einem der vorhergehenden Ansprüche 16 bis 19, wobei:
(b) bis zu 12 Gew.-% des Produkts ausmacht; und
(c) bis zu 10 Gew.-% des Produkts ausmacht.

21. Produkt gemäß Anspruch 20, wobei:
(b) 2 - 6 Gew.-% des Produkts ausmacht; und
(c) 1 - 5 Gew.-% des Produkts ausmacht.

22. Verfahren zur Verzögerung der regulierten Freisetzung eines wasserlöslichen aktiven Bestandteils, wobei das Verfahren den Einsatz eines Produkts beinhaltet, umfassend:
(a) einen Kern, umfassend mindestens einen wasserlöslichen, aktiven Bestandteil;
(b) eine erste Überzugsschicht, welche zwischen (a) und Schicht (c) liegt, wobei die Schicht die Fähigkeit besitzt, den aktiven Bestandteil mit einer regulierten Geschwindigkeit freizusetzen; und
(c) eine zweite Überzugsschicht, die (a) und (b) einkapselt, wobei die Schicht (c) eine Wasserdampf-Durchlaßrate von 2,5 g/m²/Tag oder weniger besitzt.

## Revendications

1. Produit à libération contrôlée différée, comprenant :
(a) un coeur comprenant un ingrédient actif hydrosoluble ;
(b) une première couche de revêtement sur la surface du coeur (a), ladite couche ayant l'aptitude à libérer l'ingrédient actif à une vitesse contrôlée ; et
(c) une seconde couche de revêtement encapsulant (a) et (b), ayant une faible vitesse de transmission de vapeur d'eau ;
de sorte que ladite seconde couche de revêtement (c) fait que la libération substantielle de l'ingrédient actif est retardée pendant au moins quatre semaines à partir de l'exposition initiale du produit à de l'humidité et, une fois que la libération substantielle a commencé, la vitesse de libération correspond essentiellement à celle contrôlée par la première couche de revêtement (b) seule.

2. Produit selon la revendication 1, dans lequel l'ingrédient actif est un agent actif dans le domaine biologique ou horticole.

3. Produit selon la revendication 2, dans lequel l'ingrédient actif est choisi dans le groupe constitué par les substances nutritives pour plantes, les pesticides et les herbicides.

4. Produit selon la revendication 3, dans lequel l'ingrédient actif est l'urée ou l'urée revêtue de soufre.

5. Produit selon l'une quelconque des revendications précédentes, dans lequel la seconde couche de revêtement (c) qui encapsule la première couche de revêtement (b) a
une vitesse de transmission de vapeur d'eau de 2,5 g/m²/jour ou moins.

6. Produit selon la revendication 5, dans lequel la seconde couche de revêtement a une vitesse de transmission de vapeur d'eau de 1,0 g/m²/jour ou moins.

7. Produit selon l'une quelconque des revendications précédentes, dans lequel la première couche de revêtement (b) est un copolymère huile végétale/dicyclopentadiène.

8. Produit selon l'une quelconque des revendications précédentes, dans lequel la seconde couche (c) est un thermoplastique à base de chlorure de vinylidène.

9. Produit selon la revendication 8, dans lequel le thermoplastique à base de chlorure de vinylidène est choisi dans le groupe comprenant les polymères et copolymères chlorure de vinylidène/acrylate, les polymères et copolymères chlorure de vinylidène/acrylate de méthyle/méthacrylate de méthyle, et les polymères et copolymères chlorure de vinylidène/méthacrylate de méthyle/acrylonitrile.

10. Produit selon l'une quelconque des revendications précédentes, dans lequel la première couche de revêtement (b) comprend jusqu'à 12 % en poids du produit ; et la seconde couche de revêtement (c) comprend jusqu'à 10 % en poids du produit.

11. Produit selon la revendication 10, dans lequel la première couche de revêtement (b) comprend de 2 à 6 % en poids du produit ; et la seconde couche de revêtement (c) comprend de 1 à 5 % en poids du produit.

12. Produit à libération contrôlée comprenant un ingrédient actif et un support, dans lequel l'ingrédient actif est libérable dans l'environnement pendant au moins trois périodes de libération, ce produit comprenant un produit à libération contrôlée différée selon l'une quelconque des revendications précédentes.

13. Produit selon la revendication 12, dans lequel l'ingrédient actif est libérable dans l'environnement pendant les périodes de libération à des vitesses dans les rapports de 1:3:2.

14. Produit selon la revendication 12 ou 13, dans lequel l'ingrédient actif est libérable pendant une première période d'environ trois mois à une vitesse de 1 à 2 g d'azote/mois/0,028 m³ (1 à 2 g d'azote/mois/pied³) ; pendant une deuxième période d'environ trois mois à une vitesse de 4 à 5 g d'azote/mois/0,028 m³ (4 à 5 g d'azote/mois/pied³) ; et pendant une troisième période de 1 à 2 mois à une vitesse de 2,5 à 3,5 g d'azote/mois/0,028 m³ (2,5 à 3,5 g d'azote/mois/pied³).

15. Produit selon la revendication 12, dans lequel l'ingrédient actif est libérable pendant une première période d'environ deux mois à une vitesse allant de 523,18 g/m³ à 1307,95 g/m³ (400 à 1 000 g d'azote/yard³); pendant une deuxième période d'environ deux mois à une vitesse substantiellement réduite ; et pendant une troisième période d'environ deux mois à une vitesse allant de 392,39 g/m³ à 915,57 g/m³ (300 à 700 g d'azote/yard³).

16. Produit approprié pour la libération contrôlée différée d'un ingrédient actif hydrosoluble, le produit comprenant
(a) un coeur comprenant au moins un ingrédient actif hydrosoluble ;
(b) une première couche de revêtement entre (a) et la couche (c), ladite couche ayant l'aptitude à libérer l'ingrédient actif à une vitesse contrôlée ; et
(c) une seconde couche de revêtement qui encapsule (a) et (b), ladite couche (c) ayant une vitesse de transmission de vapeur d'eau de 2,5 g/m²/jour ou moins.

17. Produit selon la revendication 16, dans lequel la libération substantielle de l'ingrédient actif hydrosoluble est retardée d'au moins quatre semaines.

18. Produit selon la revendication 16 ou 17, dans lequel
(b) est un copolymère huile végétale/dicyclopentadiène ; et
(c) est choisie dans le groupe comprenant les polymères et copolymères chlorure de vinylidène/acrylate, les polymères et copolymères chlorure de vinylidène/acrylate de méthyle/méthacrylate de méthyle, et les polymères et copolymères chlorure de vinylidène/méthacrylate de méthyle/acrylonitrile.

19. Produit selon la revendication 16 ou 17, dans lequel
(b) est du soufre ; et
(c) est choisie dans le groupe comprenant les polymères et copolymères chlorure de vinylidène/acrylate, les polymères et copolymères chlorure de vinylidène/acrylate de méthyle/méthacrylate de méthyle, et les polymères et copolymères chlorure de vinylidène/méthacrylate de méthyle/acrylonitrile.

20. Produit selon l'une quelconque des revendications 16 à 19, dans lequel
(b) va jusqu'à 12 % en poids du produit ; et
(c) va jusqu'à 10 % en poids du produit.

21. Produit selon la revendication 20, dans lequel
(b) est 2 à 6 % en poids du produit ; et
(c) est 1 à 5 % en poids du produit.

22. Méthode pour retarder la libération contrôlée d'un ingrédient actif hydrosoluble, le procédé comprenant l'emploi d'un produit comprenant
(a) un coeur comprenant au moins un ingrédient actif hydrosoluble ;
(b) une première couche de revêtement entre (a) et la couche (c), ladite couche ayant l'aptitude à libérer l'ingrédient actif à une vitesse contrôlée ; et
(c) une seconde couche de revêtement qui encapsule (a) et (b), ladite couche (c) ayant une vitesse de transmission de vapeur d'eau de 2,5 g/m²/jour ou moins.
